# EUROPÄISCHE PATENTANMELDUNG

(11) **EP 4 261 363 A1**
(43) Veröffentlichungstag der Anmeldung: **18.10.2023**
(21) Anmeldenummer: 22167802.2
(22) Anmeldetag: 12.04.2022
(51) Int. Cl.: E04G 15/04, E04B 1/41, E04G 15/06, F16B 25/00, B25B 27/14, F16B 37/12

(54) **BETONBAUTEIL MIT SCHRAUBEN-AUFNAHMELOCH**

(71) Anmelder: Weidner, Georg, 97854 Steinfeld (DE)
(72) Erfinder: Weidner, Georg, 97854 Steinfeld (DE)
(74) Vertreter: Götz, Georg Alois

(57) **Zusammenfassung**

Die Erfindung betrifft ein Verfahren zur Herstellung eines Betonbauteils, das ein Loch zur Aufnahme einer Schraube aufweist, wozu fließfähiger Beton in eine Schalung gegossen wird und dort unter Bildung des Betonbauteils aushärtet, wobei innerhalb der Schalung eine Gewindeformschraube oder sonstiger Platzhalter-Körper mit mindestens einem Außengewinde mit dem noch fließfähigen Beton direkt umgossen, direkt umgeben oder direkt in Berührung gebracht wird, und aufgrund des Außengewindes sich eine Gewindestruktur in den/dem Beton einprägt oder ausbildet, der dann unter Bildung des Betonbauteils mit wenigstens einem gegossenen, komplementären Innengewinde im Aufnahmeloch aushärtet.

## Beschreibung

Die Erfindung betrifft ein Verfahren zur Herstellung eines Betonbauteils, das ein Loch zur Aufnahme einer Schraube aufweist, wozu fließfähiger Beton in eine Schalung gegossen wird und dort unter Bildung des Betonbauteils aushärtet. Ferner betrifft die Erfindung einen Platzhalterkörper, insbesondere eine Gewindeformschraube, mit einem Gewindeschaft, auf dessen Außenmantel oder Außenwandung mindestens ein Außengewinde ausgebildet ist. Der Platzhalter bzw. die Gewindeformschraube sind zur Verwendung in dem genannten Herstellungsverfahren ausgebildet. Die Erfindung betrifft außerdem die Verwendung des mit dem Platzhalterkörper im Beton gebildeten Aufnahmelochs des Betonteils, sowie die Verwendung des Platzhalterkörpers oder der Gewindeformschraube mit mindestens einem Außengewinde als Mittel zur Befestigung oder Anbringung von Gegenständen.

Zu Befestigungszwecken an Betonbauteilen ist es allgemein bekannt, Dübel in im Beton ausgebildeten Aufnahmelöchern einzubringen, und dann Schrauben in die Dübel einzudrehen. Ferner ist es bekannt, Aufnahmelöcher im Beton mit einem Schlagbohrer oder dergleichen vorzubohren, und dann selbstschneidende Betonschrauben zweckmäßig mit einem Akkuschrauber direkt in den Beton einzuschrauben, wobei ein Innengewinde in das Beton-Aufnahmeloch eingeschnitten wird. Allerdings braucht man zum Eindrehen solcher Betonschrauben viel Kraft. Die selbstschneidenden Betonschrauben unterliegen durch dieses Einschneiden in den harten Beton einem hohen Verschleiß.

Aus US 2017/0 096 810 A1 zeigt Betondübel und ein System zum Setzen derselben. Hierzu dient unter anderem eine Hülse, welche der Aufnahme des Betondübels dient und auf ihrem Außenmantel mit einem wendeiförmig verlaufenden Vorsprung ausgebildet ist. Dieser ist dazu vorgesehen, einer Rissbildung im Beton entgegenzuwirken.

Aus DE 197 00 280 A1 ist ein Schalungshilfsteil für eine Gewindehülse bekannt, das auf das Schalungshilfsteil aufgesteckt wird. Die Gewindehülse weist einen Gewindeteil für die Aufnahme eines schraubbaren Spannenstabes zur Bildung einer sogenannten Dywidag-Verbindung auf.

In US 5,174,910 wird eine an einer Beton-Schalung zu befestigenden Form zur Bildung von Anker-Führungslöchern in Beton beschrieben. Die Form besitzt einen Vorsprung, welcher in eine mit einem Gewindeabschnitt versehene Metallkappe eingeführt ist. Das Außengewinde der Metallkappe kämmt direkt mit dem unmittelbar anliegenden, umgebenden Beton.

Es ist die Aufgabe der vorliegenden Erfindung, die Nachteile zu beseitigen oder zu mindern, die sich aus dem oben erörterten Stand der Technik ergeben und insbesondere Aufnahmelöcher in Betonbauteilen für Befestigungsschrauben zu schaffen, welche sich mit minimalem Aufwand herstellen und nutzen lassen.

Die Aufgabe wird gelöst durch das im Anspruch 1 angegebene Herstellungsverfahren, den im Anspruch 8 angegebenen Platzhalterkörper mit Außengewinde und die in den Ansprüchen 11-14 angegebenen Verwendungen eines betonierten Innengewindes bzw. eines ein betonierten Platzhalterkörpers mit Außengewinde. Optionale Weiterbildungen der Erfindung ergeben sich aus den abhängigen Ansprüchen und den nachfolgenden Ausführungen.

Gemäß dem erfindungsgemäßen Herstellungsverfahren wird beim Gießen des fließfähigen bzw. flüssigen Betons die Gewindeformschraube oder der sonstige, mindestens ein Außengewinde aufweisende Platzhalterkörper mit eingegossen. Durch das Außengewinde wird beim Gießen eine Gewindestruktur komplementär zum Außengewinde in die Innenwandung der sich im Beton aufgrund des Platzhalterkörpers ergebenden Aussparung eingeprägt. Im Zuge des Aushärtens des Betons wird das Betonbauteil mit wenigstens dem einen gegossenen, komplementären Innengewinde gefertigt.

Gemäß einer vorteilhaften Weiterbildung des erfindungsgemäßen Verfahrens wird nach dem Aushärten des gegossenen Betons die Gewindeformschraube bzw. der Platzhalter-Körper aus der Gewindestruktur im ausgehärteten Betonbauteil herausgedreht bzw. entfernt. Was im Betonbauteil verbleibt, ist das freigewordene Aufnahmeloch mit dem wenigstens einen komplementären Innengewinde zum Einschrauben eines Gegenstands mit passendem bzw. entsprechenden Außengewinde. Damit wird der Vorteil erzielt, dass eine weitere (andere) Beton-Schraube mit zugehörigem bzw. entsprechenden Außengewinde in das "betonierte" Innengewinde des Aufnahmelochs zum Befestigen von Bauteilen oder Gegenständen eingeschraubt werden kann. Eine solche Beton-Schraube kann wieder herausgeschraubt und öfter wieder verwendet werden, weil ihre Gewindegänge nicht durch Einschneiden in harten Beton verschlissen werden, wie es bei selbstschneidenden Betonschrauben der Fall ist.

Im Rahmen einer Weiterbildung des erfindungsgemäßen Verfahrens werden der Platzhalter-Körper oder sein Außengewinde mit Trennmittel versehen, bevor er bzw. es mit fließfähigem Beton umgossen oder umgeben werden. Trennmittel zum Einsatz bei Betonschalungen, um die Schalung später leicht und ohne Schäden vom Beton ablösen zu können, sind allgemein bekannt. Dementsprechend lassen sich auch Gewindeformschrauben, wenn sie mit Trennmittel versehen sind, leichter vom Beton lösen bzw. aus dem im Beton gebildeten bzw. ausgesparten Aufnahmeloch entfernen.

Bei praktischen Versuchen hat sich herausgestellt, dass zur Bildung des Innengewindes im Beton-Aufnahmeloch ein Platzhalterkörper mit einem groben Außengewinde und vorzugsweise mit tiefen Flanken zweckmäßig ist. Dem trägt eine vorteilhafte Weiterbildung des erfindungsgemäßen Verfahrens dadurch Rechnung, dass ein Platzhalterkörper mit einem Außengewinde verwendet wird, das als Trapezgewinde ausgeführt ist.

Ferner hat es sich als zweckmäßig erwiesen, zur Bildung des betonierten Innengewindes eine Gewindeformschraube oder einen Platzhalterkörper jeweils mit einem Außengewinde hoher Steigung zu verwenden. Die Steigung kann beispielsweise im Bereich von 4 mm bis 17 mm oder 5 mm bis 16 mm liegen.

Ferner zweckmäßig ist eine erfindungsgemäße Weiterbildung, wonach ein Platzhalter-Körper mit einem Außengewinde verwendet wird, dessen Schrauben- bzw. Gewindeschaft-Durchmesser oder kleinster Durchmesser oder Kerndurchmesser im Bereich von 4 mm bis 17 mm oder 5 mm bis 16 mm liegt. Analoges gilt auch für die Verwendung eines Platzhalterkörpers mit einem Außengewinde, dessen Außendurchmesser oder größter Durchmesser oder Nenndurchmesser im Bereich von 6 mm bis 19 mm oder 7 mm bis 18 mm liegt.

Im Rahmen des erfindungsgemäßen Systems liegt auch eine Gewindeformschraube oder ein sonstiger Platzhalterkörper mit einem Gewindeschaft, auf dessen Außenmantel oder Außenwandung mindestens ein Außengewinde ausgebildet ist. Als eine Art Schraubenkopf sind am Gewindeschaft vorzugsweise an dessen Ende eine Haltescheibe oder eine Halteplatte angebracht oder gegebenenfalls einstückig ausgebildet, die jeweils mit mindestens einem Befestigungsmittel versehen sind. Eine geometrische Erstreckung der Haltescheibe oder Halteplatte überragt einen Querschnitt des Gewindeschafts. Dadurch werden Möglichkeiten oder Platz für die Anordnung des oder der der Befestigungsmittel in der Haltescheibe oder Halteplatte oder für eine flächige Anlage der Haltescheibe oder Halteplatte an einer Schalungswandung geschaffen.

In konkreter Ausbildung dieses Erfindungsgedankens ist das mindestens eine Befestigungsmittel der Haltescheibe oder Halteplatte ganz oder teilweise mittels einem oder mehreren Magnetelementen, insbesondere mittels eines oder mehrerer Dauermagnete, realisiert. Dadurch ist es möglich, die Gewindeschraube oder den Platzhalterkörper durch magnetischer Haftkräfte an einem Schalungsboden oder einer Schalungswand, wenn diese mit Metall oder sonst magnetisierbar ausgebildet sind, zu fixieren. Stehen die Gewindeformschraube oder der Außengewinde-Platzhalterkörper aufgrund ihres/seines Umgießens mit Beton in Eingriff oder in fester Verbindung mit dem herzustellenden Betonbauteil, lässt sich auch dieses über die Gewindeformschraube oder den Platzhalterkörper bzw. der Haltescheibe oder Halteplatte an der von den Magnetelementen darin magnetisierten Schalung fest anordnen.

Das spätere Lösen des Platzhalterkörpers vom erhärteten Beton des Betonbauteils erleichtert es, wenn nach einer optionalen Erfindungsweiterbildung die als Schraubenkopf dienende Haltescheibe oder Halteplatte mit einem konischen Querschnitt gestaltet ist.

Im Rahmen der Erfindung liegt auch eine Verwendung eines Innengewindes des Betonbauteil-Aufnahmelochs, nachdem dieses Innengewinde beim Gießen des Betonbauteils von dem Außengewinde des mit umgossenen Platzhalterkörpers direkt in den Beton eingeprägt, und dann der Platzhalterkörper vom unterdessen erhärteten Betonbauteil entfernt bzw. herausgeschraubt worden ist. Die Verwendung besteht darin, dass dieses betonierte Innengewinde des Aufnahmelochs des gegossenen Betonbauteils nachträglich zur Aufnahme und/oder zum Eindrehen einer Schraube oder Einschrauben von Gegenständen mit komplementärem bzw. passenden Außengewinde in das vorgefertigte Innengewinde genutzt wird. Zweckmäßig wird das Betonbauteil mit dem Aufnahme-Loch nach dem oben geschilderten Verfahren gefertigt.

Eine im Rahmen der Erfindung liegende Verwendung des oben angesprochenen Platzhalter-Körpers mit mindestens einem Außengewinde, insbesondere der Gewindeformschraube, besteht im Einsatz als Mittel zur Befestigung oder Anbringung von Gegenständen. Dabei kämmt dessen Außengewinde oder steht in Eingriff mit einem Innengewinde, das direkt an oder in der Beton-Innenwandung des Aufnahmelochs in dem Betonbauteil eingeprägt ist. Die Kombination aufweisend Platzhalterkörper mit Außengewinde im Gewinde-Aufnahmeloch des Betonbauteils kann als temporäre oder auch als Dauerbefestigung genutzt werden. Das Betonbauteil lässt sich auch in diesem Fall zweckmäßig nach dem oben geschilderten Herstellungsverfahren realisieren.

Weitere Einzelheiten, Merkmale, Merkmals(unter)kombinationen, Vorteile und Wirkungen auf Basis der Erfindung ergeben sich aus der nachfolgenden Beschreibung eines bevorzugten Ausführungsbeispiels der Erfindung und den Figuren. Diese zeigen in jeweils perspektivischer Darstellung in
- Fig. 1: eine Gewindeformschraube, geeignet zur Verwendung im erfindungsgemäßen Herstellungsverfahren,
- Fig. 2: das erfindungsgemäß hergestellte Betonbauteil mit Aufnahmeloch und die Gewindeformschraube nach Entfernen aus dem Aufnahmeloch.

Die Figuren sind lediglich beispielhafter Natur und dienen nur dem Verständnis der Erfindung. Die gleichen Elemente sind mit denselben Bezugszeichen versehen.

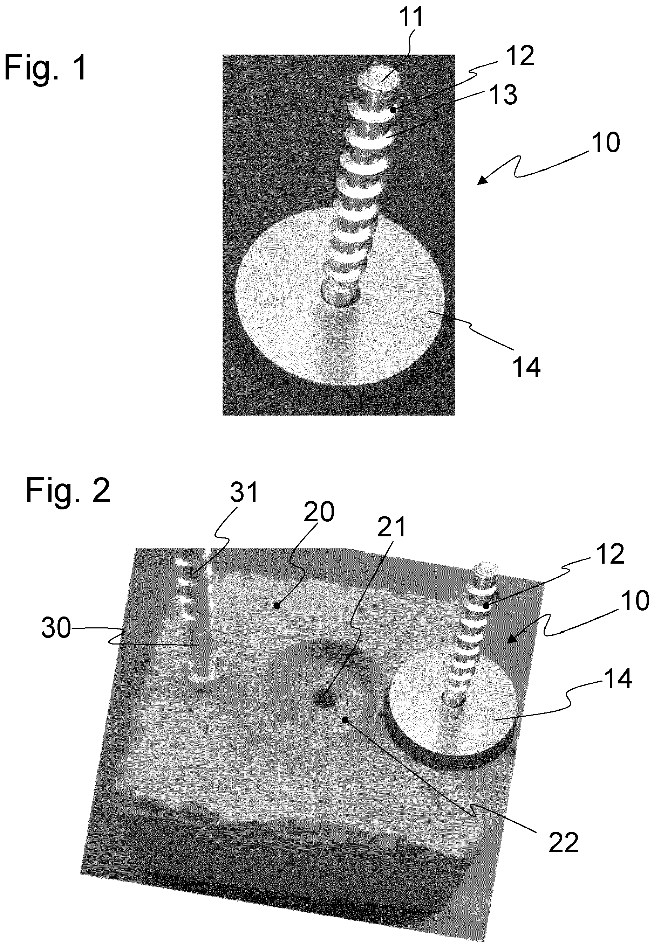

Gemäß Fig. 1 weist die dort dargestellte Gewindeformschraube 10 einen Gewindeschaft 11 auf, dessen Außenmantel ein grobes Außengewinde 12 mit tiefen Gewindeflanken 13 aufweist. Am gemäß Bild 1 unteren Ende des Gewindeschafts 11 ist eine Halteplatte 14 entweder als Zusatzteil aufgesteckt oder einstückig ausgebildet. Im Inneren der Halteplatte 14 können als Befestigungselemente Dauermagnetteile integriert sein (im Bild nicht gezeigt).

Gemäß Fig. 2 ist ein Betonbauteil 20 mit einem Aufnahmeloch 21 bereits fertig gegossen und erhärtet. In die Beton-Innenwandung des Aufnahmelochs 21 ist im Zuge des Beton-Gießens ein Innengewinde (nicht dargestellt) mittels des Außengewindes 12 der (rechts neben dem Aufnahmeloch 21 abgestellten) Gewindeformschraube 10 eingeprägt worden. Dazu wurde vorher die Gewindeformschraube 10 bei der Bildung des Betonbauteils 20 innerhalb einer (nicht gezeigten) Schalung quasi als Platzhalter für das Aufnahmeloch 21 mit eingegossen und dann wieder entfernt. Dabei ist eine runde Aussparung/Vertiefung 22 komplementär zur Halteplatte 14 am Ende des Gewindeschafts 11 im Betonbauteil 20 verblieben. Die Aussparung/Vertiefung 22 umgibt das Aufnahmeloch 21. Eine Universalschraube 30, insbesondere eine Befestigungsschraube, dessen Außengewinde 31 dem Außengewinde 12 der Gewindeformschraube 10 entspricht oder zumindest weitgehend damit übereinstimmt, kann beispielsweise zu Befestigungszwecken in das Aufnahmeloch 21 des Betonbauteils 20 hineingeschraubt werden.

### Bezugszeichenliste

- 10: Gewindeformschraube, Platzhalterkörper
- 11: Gewindeschaft
- 12: Außengewinde
- 13: Gewindeflanke
- 14: Halteplatte
- 20: Betonbauteil
- 21: Aufnahmeloch
- 22: Aussparung/Vertiefung
- 30: Universalschraube
- 31: komplementäres Außengewinde der Universalschraube

## Patentansprüche

1. Verfahren zur Herstellung eines Betonbauteils (20), das ein Loch (21) zur Aufnahme einer Schraube (30) aufweist, wozu fließfähiger Beton in eine Schalung gegossen wird und dort unter Bildung des Betonbauteils (20) aushärtet,
**dadurch gekennzeichnet, dass**
innerhalb der Schalung eine Gewindeformschraube (10) oder sonstiger Platzhalter-Körper (10) mit mindestens einem Außengewinde (12) mit dem noch fließfähigen Beton direkt umgossen, direkt umgeben oder direkt in Berührung gebracht wird, wobei aufgrund des Außengewindes (12) sich eine Gewindestruktur in den/dem Beton einprägt oder ausbildet, der dann unter Bildung des Betonbauteils (20) mit wenigstens einem gegossenen, komplementären Innengewinde im Aufnahmeloch (21) aushärtet.

2. Verfahren nach Anspruch 1,
**dadurch gekennzeichnet, dass**
nach dem Aushärten des gegossenen Betons die Gewindeformschraube (10) oder der Platzhalter-Körper (10) aus der Gewindestruktur im ausgehärteten Betonbauteil (20) herausgedreht wird, wobei im Betonbauteil (20) das freigewordene Aufnahmeloch (21) mit dem wenigstens einen Innengewinde zum Einschrauben eines Gegenstands mit komplementärem Außengewinde (31) verbleibt.

3. Verfahren nach Anspruch 1 oder 2,
**dadurch gekennzeichnet, dass**
die Gewindeformschraube (10) oder der Platzhalter-Körper (10) oder sein Außengewinde (12) mit Trennmittel versehen werden, bevor er bzw. es mit fließfähigem Beton umgossen oder umgeben werden.

4. Verfahren nach Anspruch 1, 2 oder 3,
**gekennzeichnet durch**
die Verwendung einer Gewindeformschraube (10) oder eines Platzhalter-Körpers (10) mit einem als Trapezgewinde ausgeführten Außengewinde (12).

5. Verfahren nach einem der vorangehenden Ansprüche,
**gekennzeichnet durch**
die Verwendung einer Gewindeformschraube (10) oder eines Platzhalter-Körpers (10) mit einem Außengewinde (12), dessen Steigung im Bereich von 4 mm bis 17 mm oder 5 mm bis 16 mm liegt.

6. Verfahren nach einem der vorangehenden Ansprüche,
**gekennzeichnet durch**
die Verwendung einer Gewindeformschraube (10) oder eines Platzhalter-Körpers (10) mit einem Außengewinde (12), dessen Gewindeschaft (11) oder kleinster Durchmesser oder Kerndurchmesser im Bereich von 4 mm bis 17 mm oder 5 mm bis 16 mm liegt.

7. Verfahren nach einem der vorangehenden Ansprüche,
**gekennzeichnet durch**
die Verwendung einer Gewindeformschraube (10) oder eines Platzhalter-Körpers (10) mit einem Außengewinde (12), dessen Außendurchmesser oder größter Durchmesser im Bereich von 6 mm bis 19 mm oder 7 mm bis 18 mm liegt.

8. Platzhalterkörper (10), insbesondere Gewindeformschraube (10), mit einem Gewindeschaft (11), auf dessen Außenmantel oder Außenwandung mindestens ein Außengewinde (12) ausgebildet ist, zur Verwendung in einem Herstellungsverfahren nach einem der vorangehenden Ansprüche,
**dadurch gekennzeichnet, dass**
am Gewindeschaft (11) eine Haltescheibe oder eine Halteplatte (14) jeweils mit mindestens einem Befestigungsmittel angebracht ist, und eine Flächenerstreckung der Haltescheibe oder Halteplatte (14) einen Querschnitt des Gewindeschafts (11) überragt.

9. Platzhalterkörper nach Anspruch 8,
**dadurch gekennzeichnet, dass**
das mindestens eine Befestigungsmittel der Haltescheibe oder Halteplatte (14) ganz oder teilweise mit einem oder mehreren Dauermagneten realisiert ist.

10. Platzhalterkörper nach Anspruch 8 oder 9,
**dadurch gekennzeichnet, dass**
die Haltescheibe oder Halteplatte (14) einen konischen Querschnitt aufweist.

11. Verwendung eines direkt in Beton bei dessen Gießen eingeprägten Innengewindes eines Aufnahmelochs (21) eines gegossenen Betonbauteils (20) zur Aufnahme und/oder zum Eindrehen einer Schraube (30) oder Einschrauben von Gegenständen mit komplementärem Außengewinde (31).

12. Verwendung nach Anspruch 11,
**dadurch gekennzeichnet, dass**
das Betonbauteil (20) mit dem Innengewinde in seinem Aufnahmeloch (21) mittels einer Gewindeformschraube (10) oder eines Platzhalter-Körpers (10) mit mindestens einem Außengewinde (12) auf seiner Außenmantelfläche hergestellt worden ist, indem die Gewindeformschraube (10) oder der Platzhalter-Körper (10) derart mit fließfähigem Beton direkt umgossen, direkt umgeben oder direkt in Berührung gebracht worden ist, und aufgrund des Außengewindes (12) sich eine Gewindestruktur in den Beton eingeprägt oder ausgebildet hat, und nach dem Aushärten des Betons die Gewinde vom Schraube (10) oder der Platzhalterkörper (10) aus der Gewindestruktur im ausgehärteten Betonbauteil (20) herausgedreht worden ist.

13. Verwendung nach Anspruch 11 oder 12, wobei das Betonbauteil (20) mit gegossenem Innengewinde insbesondere nach einem der Ansprüche 1-7 hergestellt worden ist.

14. Verwendung einer Gewinde vom Schraube (10) oder eines Platzhalter-Körpers (10) mit mindestens einem Außengewinde (12) als Mittel zur Befestigung oder Anbringung von Gegenständen, wobei das Außengewinde (12) kämmt oder in Eingriff steht mit einem Innengewinde, das direkt an oder in der Beton-Innenwandung eines Aufnahmelochs (21) in einem Betonbauteil ausgebildet ist, und das Betonbauteil (20) insbesondere nach einem der Ansprüche 1-7 hergestellt worden ist.
